Europäisches Patentamt

European Patent Office

Office européen des brevets

(19)

(11) Veröffentlichungsnummer: **0 104 438**
**B1**

(12) # EUROPÄISCHE PATENTSCHRIFT

(45) Veröffentlichungstag der Patentschrift:
**20.11.86**

(51) Int. Cl.⁴: **B 23 D  77/02**

(21) Anmeldenummer: **83108330.8**

(22) Anmeldetag: **24.08.83**

(54) **Einmesser-Reibahle.**

(30) Priorität: **03.09.82  DE 3232804**

(43) Veröffentlichungstag der Anmeldung:
**04.04.84 Patentblatt 84/14**

(45) Bekanntmachung des Hinweises auf die Patenterteilung:
**20.11.86 Patentblatt 86/47**

(84) Benannte Vertragsstaaten:
**CH DE FR GB IT LI SE**

(56) Entgegenhaltungen:
**DD - A - 142 514**
**DE - A - 3 022 984**
**SE - A - 7 811 613**
**US - A - 3 027 786**
**US - A - 3 203 493**

(73) Patentinhaber: **MAPAL Fabrik für Präzisionswerkzeuge
Dr. Kress KG, Obere Bahnstrasse 13 Postfach 1520,
D-7080 Aalen (DE)**

(72) Erfinder: **Die Erfinder haben auf ihre Nennung verzichtet**

(74) Vertreter: **Patentanwälte Dr. Ing. Eugen Maier Dr. Ing.
Eckhard Wolf, Pischekstrasse 19,
D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einmesser-Reibahle der die Merkmale des Oberbegriffs des Anspruchs 1 aufweisenden Gattung.

Bei einer aus SE-A-7 811 613-4 bekannten Reibahle der vorgenannten Gattung liegt die Spannpratze unmittelbar gegen die Messerplatte an und presst diese sowohl gegen die Schulter des Messerkopfes als auch gegen eine schwenkbar am Messerkopf gelagerte Fixierplatte, die etwa dieselbe Stärke wie die Messerplatte aufweist und diese in einer stirnseitigen stufenförmigen Aussparung aufnimmt.

Bei einer aus der DE-OS 30 22 984 bekannten Reibahle, deren radial verstellbarer Messerträger nicht schwenkbar am Messerkopf gelagert ist, liegt die Messerplatte in einer nach der Spannpratze hin offenen Aussparung des Messerträgers und wird in dieser Aussparung dadurch gehalten, dass die Spannpratze mit ihrer Oberkante gegen eine vorspringende Leiste der Messerplatte und mit einer an ihrem unteren Rand ausgesparten V-Nut gegen eine spitzwinklige Leiste des Messerträgers anliegt, der ein von der Spannschraube durchsetztes Langloch aufweist.

Bei diesen beiden Reibahlen ist infolge des geringen Flächendrucks keine ausreichende kraftschlüssige Verbindung der Spannpratze mit der Messerplatte und damit auch keine exakte Fixierung der Messerplatte in der Aussparung des Messerträgers gewährleistet.

Messerplatten bei spanabhebenden Werkzeugen, beispielsweise bei einem Tieflochbohrer, in einem am Messerkopf schwenkbar gelagerten Träger anzuordnen, ist beispielsweise durch die US-PS 3 203 493 bekannt. Bei diesem Werkzeug ist der Messerträger mittels einer die Schwenkachse des Messerträgers bildenden Schraube am Messerkopf angeordnet und wirkt in dieser Anordnung gleichzeitig als die Messerplatte gegen eine Schulter des Messerkopfes anpressendes Organ.

Dieses Werkzeug weist zwar ebenfalls den Vorteil der radialen Einstellbarkeit des Messerträgers mittels nur eines gegen eine Schmalfläche des Messerträgers anliegenden Stellgliedes auf, eine sichere kraft- und formschlüssige Verankerung der Messerplatte, wie sie bei Reibahlen zur Erzielung einer einwandfreien glatten Bohrwandung unbedingt erforderlich ist, ist bei einer solchen Einspannung der Messerplatte nicht gewährleistet. Der Erfindung liegt die Aufgabe zugrunde, die Halterung und die radiale Einstellung der Messerplatte mit einfacheren Mitteln zu bewirken, die Messerplatte sicher zu verankern und damit eine für ein einwandfreies Arbeiten der Reibahle notwendige Aufnahme der Schnittkräfte im Messerkopf zu gewährleisten.

Diese Aufgabe wird mit Mitteln gelöst, die die kennzeichnenden Merkmale des Anspruchs 1 bilden, wobei bei Verwendung einer Wendemesserplatte gleichzeitig eine Beschädigung der nicht im Eingriff befindlichen Nebenschneide der Wendemesserplatte dadurch vermieden wird, dass das Stellglied zur radialen Einstellung der Messerplatte nicht gegen diese Nebenschneide anliegt. Vorteilhafte Ausführungsbeispiele der erfindungsgemässen Einmesser-Reibahle weisen Merkmale auf, wie sie in den Unteransprüchen angegeben sind.

In der Zeichnung ist ein Ausführungsbeispiel der Erfindung in schematischer Weise dargestellt. Es zeigen

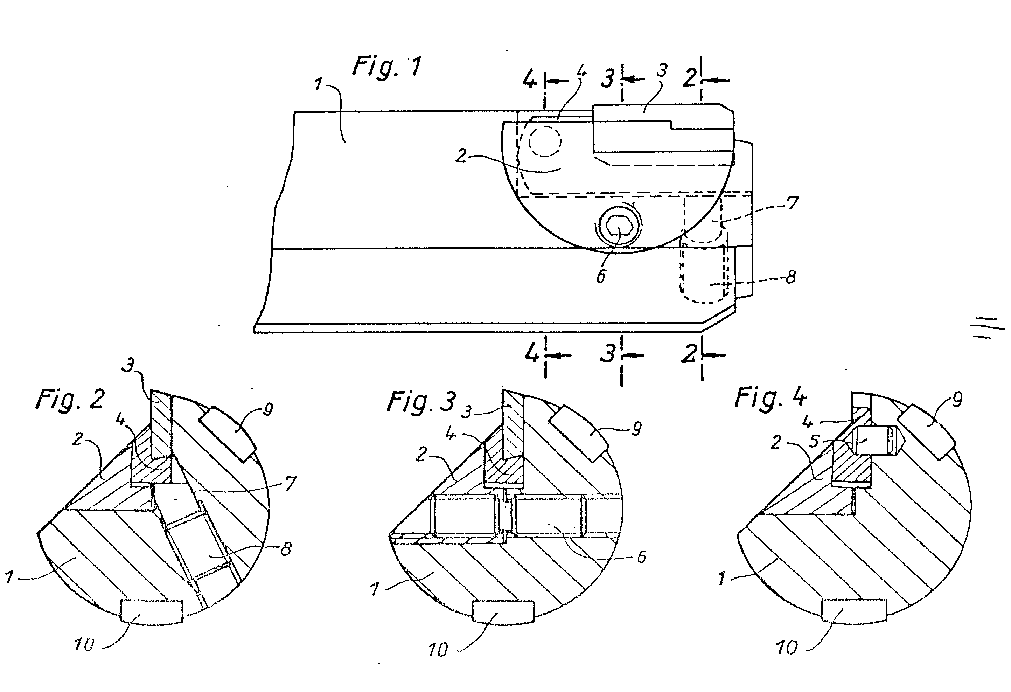

Fig. 1 eine Seitenansicht des Messerkopfes,

Fig. 2 einen Radialschnitt nach der Schnittlinie 2–2,

Fig. 3 einen Radialschnitt nach der Schnittlinie 3–3,

Fig. 4 einen Radialschnitt nach der Schnittlinie 4–4

Der Messerkopf 1 weist eine Aussparung auf, in die die Spannpratze 2 so eingreift, dass ihre den Spanraum begrenzende Fläche mit Flächen des Messerkopfes, fluchtet. Mitteils eines Doppelgewindebolzens 6 wird die den Messerträger 4 in einer Längsaussparung aufnehmende Spannpratze 2 gegen die durch eine Aussparung des Messerkopfes gebildete Schulter des Messerkopfes 1 gepresst, wobei die Längsaussparung des Messerträgers 4 eine nur wenig geringere Tiefe aufweist als es der Plattenstärke der Messerplatte 3 entspricht. Die die Längsaussparung des Messerträgers 4 begrenzenden Flächen schliessen einen spitzen Winkel ein, der dem Nebenschneidenfreiwinkel der Messerplatte 3 entspricht, so dass die Freifläche der Nebenschneide flächig gegen die eine Fläche der Längsaussparung anliegt.

Der Messerträger 4 ist um den Zapfen 5 schwenkbar gelagert. Die Schwenkbewegung des Messerträgers 4 und damit die radiale Einstellung der Messerplatte 3 erfolgt mittels des als Keil ausgebildeten Stellgliedes 7, dessen Längsverschiebung in einer Bohrung des Messerkopfes 1 durch die Stellschraube 8 bewirkt wird. Am Umfang des Messerkopfes sind in bekannter Weise Führungsleisten 9 und 10 angeordnet.

## Patentansprüche

1. Einmesser-Reibahle mit am Umfang des Messerkopfes (1) angeordneten Führungsleisten (9, 10) und einer mittels einer Spannpratze (2) gegen eine Schulter des Messerkopfes (1) anpressbaren auswechselbaren Messerplatte (3), die in einer Aussparung eines mittels eines Stellgliedes (7) radial einstellbaren, im Bereich seines schaftseitigen Endes schwenkbar gelagerten Messerträgers (4) angeordnet ist, dadurch gekennzeichnet, dass der auf seiner ganzen Breitseite von der Spannpratze (2) druckbeaufschlagte Messerträger (4) auf seiner der Schulter des Messerkopfes (1) zugewandten Seite eine randoffene Aussparung mit gegenüber der Dicke der Messerplatte (3) geringerer Tiefe aufweist.

2. Einmesser-Reibahle nach Anspruch 1, dadurch gekennzeichnet, dass das Stellglied (7) gegen die achsennahe Längsschmalfläche des Messerträgers (4) in dessen vorderem Bereich anliegt.

3. Einmesser-Reibahle nach den Ansprüchen 1 und 2, dadurch gekennzeichnet, dass der Messerträger (4) in eine rechtwinklige Längsaussparung der Spannpratze (2) eingreift und die beiden die Längsaussparung des Messerträgers (4) begrenzenden Flächen einen dem Nebenschneidenfreiwinkel der Messerplatte (3) entsprechenden Winkel einschliessen.

## Revendications

1. Alésoir à une seule lame comportant des bandeaux de guidage (9, 10) disposés sur la périphérie de la tête porte-lame (1) et une plaquette de coupe interchangeable (3) pouvant être serrée contre un épaulement de la tête porte-lame (1) au moyen d'une griffe de serrage (2), laquelle plaquette de coupe est placée dans un évidement d'un porte-lame (4) réglable radialement au moyen d'un organe de réglage (7) et monté pivotant dans la zone de son extrémité côté fût, caractérisé en ce que le porte-lame (4) soumis sour toute sa largeur à la pression de la griffe de serrage (2) comporte sur son côté tourné vers l'épaulement de la tête porte-lame (1) un évidement ouvert au bord ayant une profondeur plus faible que l'épaisseur de la plaquette de coupe (3).

2. Alésoir à une seule lame selon la revendication 1, caractérisé en ce que l'organe de réglage (7) appuie contre la surface longitudinale étroite voisine de l'axe du porte-lame (4), dans la zone antérieure de celui-ci.

3. Alésoir à une seule lame selon les revendications 1 et 2, caractérisé en ce que le porte-lame (4) pénètre dans un évidement longitudinal de la griffe de serrage (2) et les deux surfaces délimitant l'évidement longitudinal du porte-lame (4) font un angle correspondant à l'angle de dépouille de la plaquette de coupe.

## Claims

1. Single blade reamer having guide strips (9, 10) arranged at the periphery of the tool head (1) and a replaceable blade (3), urgeable by means of a tightening member (2) against a shoulder of the tool head (1), which is arranged in a recess of a blade carrier (4) which is pivotally located in the vicinity of its end facing the shaft and radially adjustable by means of an adjustment member (7), characterised in that the blade carrier (4) has on its entire face engaged by the tightening member (2) and on the side facing the shoulder of the tool head (1) an edgewise-open recess of lesser depth than the thickness of the blade (3).

2. Single blade reamer according to claim 1, characterised in that the adjustment member (7) contacts the lengthwise narrow face of the blade carrier (4) in its forward region.

3. Single blade reamer according to claims 1 and 2, characterised in that the blade carrier (4) engages in a right-angled lengthwise recess of the tightening member (2) and the two faces bounding the lengthwise recess of the blade carrier 4 enclose an angle corresponding to the angle of the adjacent edge of the blade (3).

Fig. 1

Fig. 2

Fig. 3

Fig. 4